Europäisches Patentamt

European Patent Office

Office européen des brevets

(19)

(11) Publication number: **0 033 648**
B1

(12) **EUROPEAN PATENT SPECIFICATION**

(45) Date of publication of patent specification: **11.04.84**

(51) Int. Cl.³: **B 62 D  33/06,** B 62 D  35/00

(21) Application number: **81300413.2**

(22) Date of filing: **02.02.81**

(54) Improvements relating to vehicle cabs having airflow deflectors on their roofs.

(30) Priority: **02.02.80 GB  8003580**

(43) Date of publication of application:
**12.08.81 Bulletin 81/32**

(45) Publication of the grant of the patent:
**11.04.84 Bulletin 84/15**

(84) Designated Contracting States:
**DE FR IT NL SE**

(56) References cited:
**DE - A - 2 743 203**
**DE - A - 2 808 209**
**DE - U - 7 540 989**
**DE - U - 7 817 059**
**FR - A - 2 299 180**
**GB - A - 1 532 283**
**US - A - 3 612 599**
**US - A - 4 054 956**
**US - A - 4 102 548**

(73) Proprietor: **MOTOR PANELS (COVENTRY) LIMITED**
**Holbrook Lane**
**Coventry CV6 4AW (GB)**

(72) Inventor: **Taylor, Merrick Wentworth**
**72 Birches Lane**
**Kenilworth Warwickshire (GB)**
Inventor: **Allen, George Robert**
**17 Park Hill**
**Kenilworth Warwickshire (GB)**
Inventor: **Strong, Terence**
**5 Grange Avenue**
**Finham Coventry (GB)**

(74) Representative: **Stonehouse, Sidney William et al,**
**Barker, Brettell & Duncan 138 Hagley Road**
**Edgbaston**
**Birmingham B16 9PW (GB)**

Courier Press, Leamington Spa, England.

## Improvements relating to vehicle cabs having airflow deflectors on their roofs

This invention relates to vehicle cabs which have airflow deflectors on their roofs to reduce drag losses.

Road freight vehicles have such cabs. The vehicles are usually, but not necessarily, tractor units for drawing semi-trailers and van trailers. Frequently semi-trailers carry standard freight containers the height of which exceeds that of the cab of the tractor, as does the height of a van trailer. This gives rise to turbulent airflow when the tractor/trailer combination is in motion, thereby increasing fuel consumption. It has become the practice to fit a deflector of generally plate form to the roof of the cab. The deflector extends across the roof of the cab and is inclined upwardly towards the rear to substantially the same height as that of the load so as to improve the airflow and consequently save fuel. It may be laid flat, or removed, when the height of the load does not exceed that of the cab.

In U.S. Patent Specification No. US—A—4102548 of Paccar Inc. and German Patent Specification No. DE—A—2743203 of Magirus-Deutz A.G. deflectors of the general form described are disclosed which are adjustable to vary the angles they occupy relative to the roofs of the vehicle cabs. The angles can be varied to suit the bodies of the vehicles or the freight loads they carry or haul. The deflector disclosed in German Patent Specification No. DE—A—2743203 has associated side wall panels extending down to the roof, and as a modification a rear wall panel may also be provided extending between the deflector and the roof so that, in accordance with the prior art portion of claim 1, when the deflector is in a raised position a compartment is defined above the roof. In both of the said specifications the deflectors are provided on cabs of long haul vehicles, the cabs being extended to include sleeping accommodation behind the drivers' seats. The extended cabs are costly to manufacture, they add to the weights of the vehicles and either add to the overall lengths of the vehicles or reduce the length of the part of the vehicle available for carrying freight.

It is also known to provide fixed, non-adjustable, deflectors on cabs. These are appropriate for vehicles having bodies of fixed heights or tractors which haul van trailers of fixed height, but are inappropriate when loads of differing heights are to be carried. In German Patent Specification DE—A—2808209 of Fa. Ackermann-Fruehauf a fixed height road freight-carrying vehicle and trailer combination is provided in which a pod of fixed construction is fitted on the roof of the vehicle cab. The pod is contoured to reduce the drag forces so that it acts as a deflector. It also provides a sleeping compartment above the cab into which access can be gained from the cab. This enables sleeping accommodation to be provided within the short length of a normal day cab but the effectiveness of the fixed pod as an air deflector is limited to a vehicle having a body of fixed height or hauling a van trailer of fixed height.

The present invention consists in a vehicle cab on which is an airflow deflector of generally plate form extending over substantially the same width as the cab and being pivoted adjacent a front edge on a front upper portion of the cab such that the deflector can be swung about a horizontal axis between raised and lowered positions relative to the cab, means being provided to retain the deflector in a raised position, the deflector having, or being associated with, side and rear walls which in a raised position of the deflector define with the deflector a compartment above the cab, characterised in that there is an opening in the roof of the cab which provides access to the compartment from the cab, and a bunk extends or is adapted to extend transversely of the cab in an elevated position within the envelope defined by the cab and the compartment and substantially directly above a driver's seat in the cab, the bunk being accessible by way of the opening when the deflector is in the retained raised position.

By virtue of the invention it is possible for sleeping accommodation to be provided within the short length of a day cab, and yet also to have the advantage of an adjustable deflector.

The side and rear walls may be of flexible material and preferably comprise inner and outer skins of flexible material. The walls may comprise flexible wall members, for example of plastics material, which are connected along one long edge to the roof of the cab and along an opposed long edge to the deflector, the latter being pivoted adjacent its front edge to the roof of the cab adjacent the front thereof.

The elevated bunk may be adapted to be erected for use when the normal seating accommodation in the cab is vacated. A second, lower bunk may be erected above the normal seating accommodation and below the elevated bunk.

In an alternative construction the deflector and side and rear walls may comprise the upper part of a pod having a lower part secured to the roof of the cab. The pod may contain front and rear bunks set transversely above the cab. The bunks become accessible to the crew of the vehicle from the cab when the deflector is swung upwardly. The front of the pod may include a member to which the upper part is pivotally connected and which is rotatable relative to the lower part to enable the upper part to be raised at the front so as to increase the capacity of the pod and provide additional headroom above the front bunk. The position of the deflector is, in each case, adjustable between lowered and raised positions and may also be adjustable into intermediate positions if desired.

Two embodiments of the invention will now be described by way of example with reference to the accompanying drawings in which:

Figure 1 is a schematic side elevation of part of a vehicle cab in accordance with the invention,

Figure 2 is an enlarged fragmentary vertical section on the longitudinal centreline of the cab showing the front part of an airflow deflector and the adjacent cab structure.

Figure 3 is an enlarged fragmentary vertical section at a hinge between the deflector and the adjacent cab structure,

Figure 4 is a fragmentary vertical section through the deflector and cab roof taken transversely of the cab,

Figure 5 is a fragmentary vertical section through a rear part of the deflector and cab roof taken longitudinally of the cab,

Figure 6 is a schematic perspective view from the rear and one side of the deflector showing a tensioning mechanism for an associated rear wall,

Figure 7 is a schematic side elevation of part of a vehicle cab in accordance with a second embodiment of the invention in which an airflow deflector forms part of a pod mounted above the cab, and

Figure 8 is a schematic vertical section through the pod of Figure 7 taken transversely of the cab.

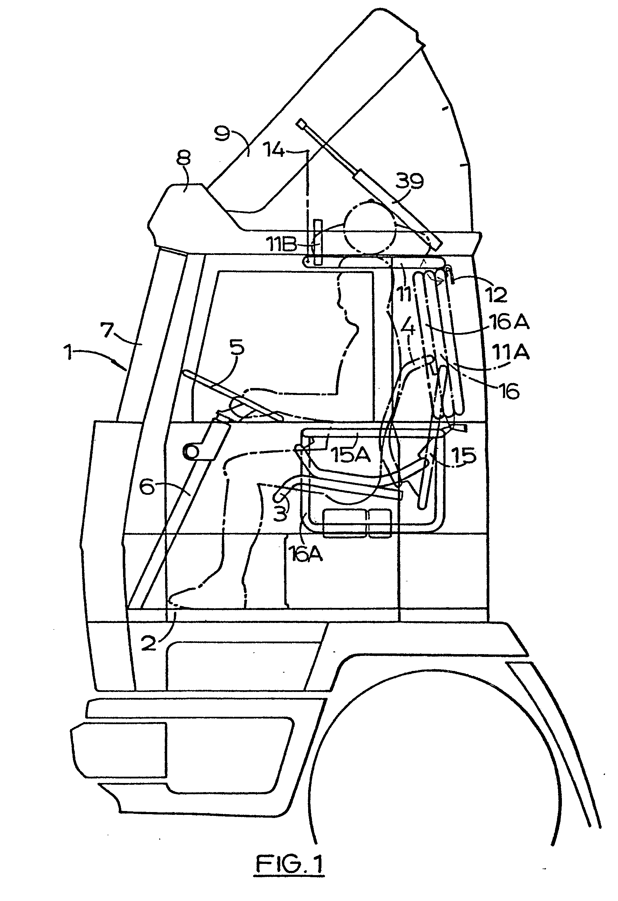

Referring to Figure 1 there is shown the outline of a vehicle cab 1 having a floor 2, a driver's seat 3, seat back rest 4, steering wheel 5 and steering column 6. A windscreen 7 is secured in the frame of the cab in known manner by a rubber grommet (not shown). The cab has a roof frame structure encompassed by a frame 8. A deflector 9 of generally plate form is pivotally mounted on the roof frame structure, the deflector being shown in a raised position.

When the seating accommodation across the cab is vacated the backrest 4 may be folded down forwardly from an upright position of use as shown in broken lines in Figure 1 to rest on the seat 3 as shown at 4A in full lines. An upper bunk 11 which lies lengthwise across the back of the cab is pivotally suspended from the rear of the cab by a hinge 12 and can be swung forwardly and upwardly from a stowed position shown in broken lines in Figure 1 at 11 to an erected position, as shown in full lines. It is maintained in the erected position by straps 11B which are removably engaged in the roof frame structure at each side. Straps 13, free ends 14 of which are removably engaged in mountings in the deflector 9, are provided to restrain an occupant from falling out of the upper bunk 11.

A lower bunk may be constituted by bunk portions 15 on the back of the back rests 4 of the driver's and mate's seats together with an intermediate bunk portion 16. The latter may be mounted across the back of the cab so that it can be moved, for example by pivoting downwardly, from a vertical position, as shown in broken lines in Figure 1, to a horizontal position. In the horizontal position, in which it may be supported by folding legs 16A, it lies between and is aligned with the bunk portions 15 (when the latter are in the positions indicated at 15A they occupy when the back rests 4 are folded down as described above) so as together with bunk portions 15, to constitute a composite bunk. Alternatively a complete lower bunk may be normally stowed lengthwise across the back of the cab, for example behind the upper bunk 11. This lower bunk may be pivotally mounted so that it can be swung forwardly and downwardly to its in-use position, resting, for example, on stops, one on each door of the cab. This lower bunk can be swung to the in-use position when the upper bunk has been erected. As an alternative to folding down the back rests 4 of the seats the back rests may be made readily removable to allow a lower bunk to be erected over the seats.

The roof frame structure of the cab provides an opening to allow access to the upper bunk when the deflector 9 is in the, or a, raised position.

When the bunks or upper bunk and intermediate bunk portion 16, as the case may be, are not in use they are stowed away across the back of the cab and the seat backrests are in upright positions. The deflector 9 may be lowered and secured to the roof of the cab or secured in a raised position depending on the height of, or absence of, a load drawn by the vehicle.

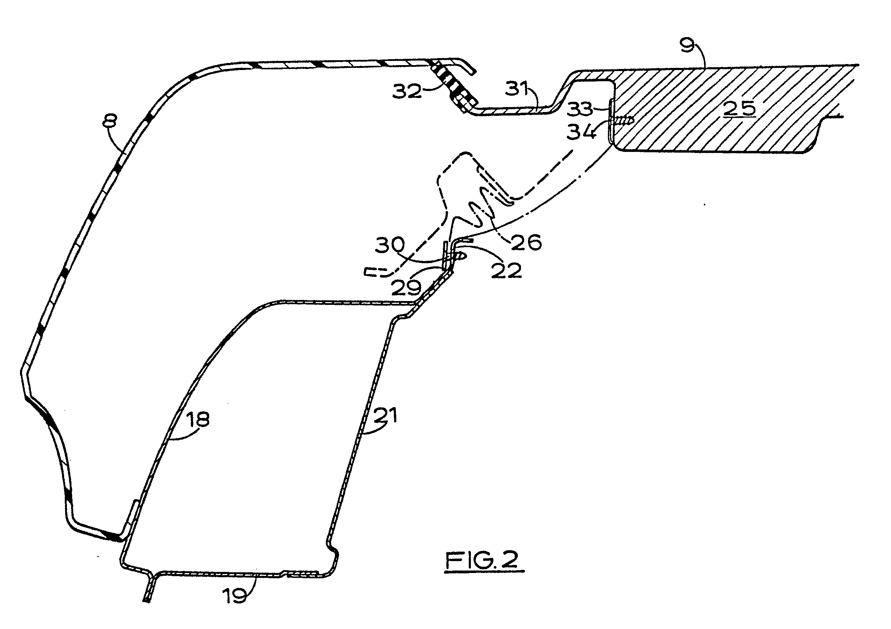

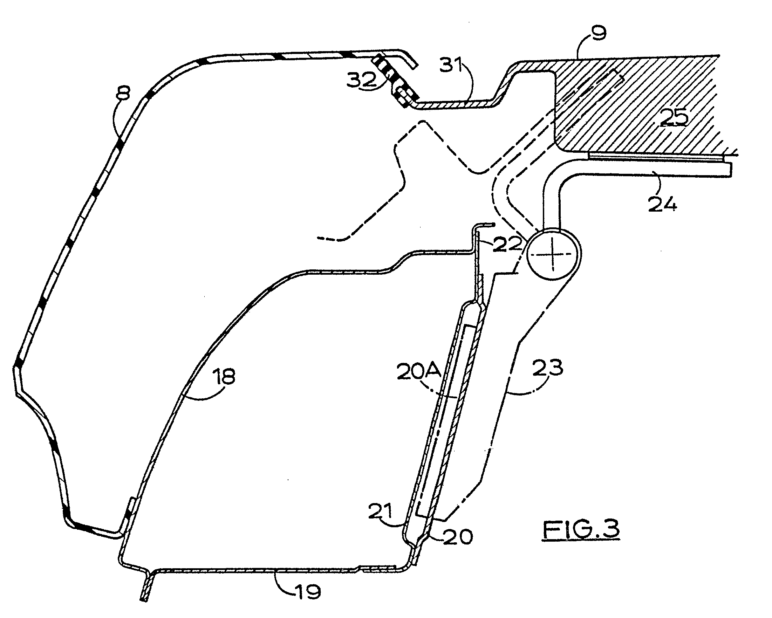

Referring now to Figures 2 and 3, across the front of the cab, above the windscreen, is a curved plate 18 forming part of a box section together with plates 19, 21. The plates 19, 21 are joined, as by welding, and provide an upstanding transverse flange 22. One arm 23 of a hinge is secured to a plate 20 which is itself secured, as by welding, to the plate 21. The other arm 24 of the hinge is secured, as by bolts, to the deflector 9 at a reinforced portion 25 thereof.

The arm 23 of the hinge is secured by bolts which pass through over-size holes in the plate 20 to a mounting plate 20A retained below the plate 20 and the plate 21. The mounting plate 20A is free to move a limited amount because of the over-size holes through which the securing bolts pass and this facilitates adjustment of the deflector 9 relative to the cab to ensure correct fitment of the deflector on the cab for use.

A flexible cover 26 surrounds the opening in the roof frame structure of the cab. The cover preferably comprises inner and outer skins 27 and 28 respectively of flexible material of which the outer skin is waterproof. A front lower edge of the cover is secured along the outside of the flange 22 by trim strips 29 and self tapping screws 30. The cover, which has been omitted from Figure 3 for clarity, may be formed with fold lines in the manner of a concertina.

The deflector 9 may comprise one or more mouldings of plastics, preferably glass reinforced plastics, or it may comprise one or more metal components, conveniently metal pressings. The deflector 9 has, at the front, a trough shaped flange 31 a free edge of which carries a sealing strip 32, for example of rubber. The sealing strip 32 seals against the inside of the front of the frame 8 when the deflector is in the lowered position, as shown in Figures 2 and 3. The frame 8 may be made in a number of sections, for example front, two sides and rear sections and provision (not shown) is made for draining the enclosure formed between the frame and plate 18 of the roof frame structure of the cab. The upper edge of the cover 26 is secured to the reinforced portion 25 of the deflector 9 by a trim strip 33 and screws 34.

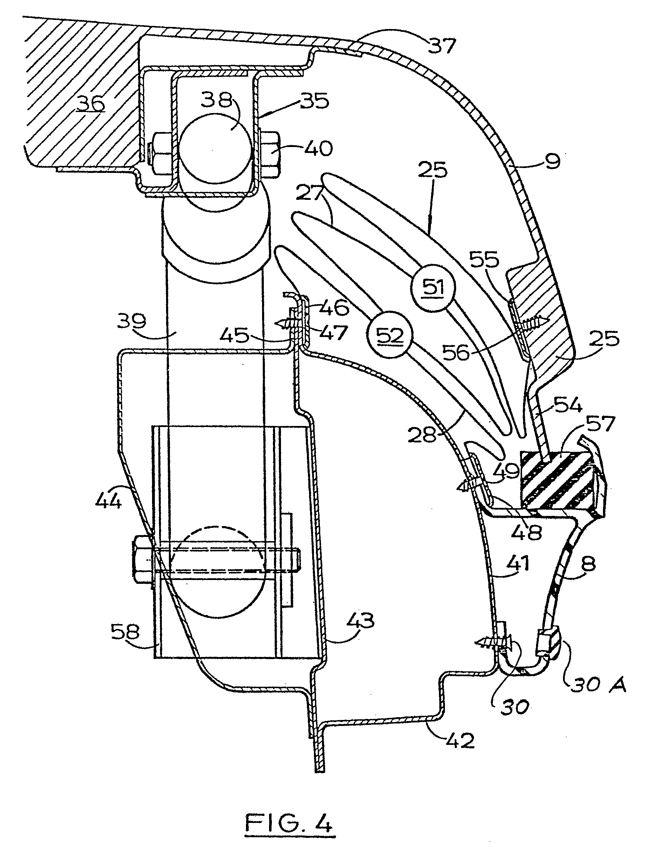

Referring now to Figure 4, a mounting 35 fabricated from three plates is secured to a further reinforced portion 36 of the deflector and to an outer part thereof at 37. The mounting 35 receives the piston rod end 38 of a double acting hydraulic actuator 39 and the rod end is retained in the mounting by a bolt 40 and a nut. There are two of the actuators 39, one on each side of the cab.

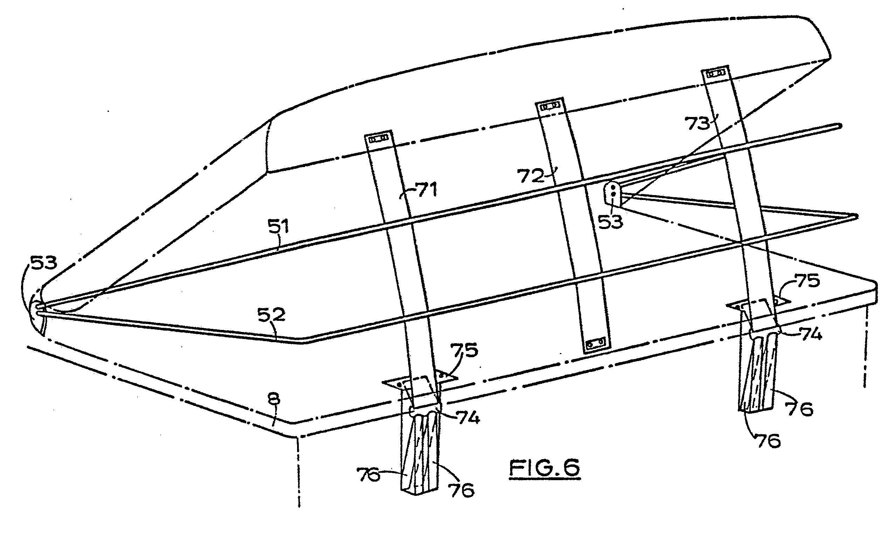

The side and roof of the cab are joined by a curved plate 41, Figure 4, which, together with plates 42, 43, forms a box section. A formed plate 44 is secured at top and bottom to said plate 43. Upper edges of the plates 41, 43, 44 are joined to provide an upstanding flange 45 whose front end forms a continuation of the flange 22. The inner skin 27 of the cover 25 is secured to the outside of the upstanding flange 45 by a trim strip 46 and screws 47 and the outer skin 28 is secured to the frame 8 and plate 41 by a trim strip 48 and screws 49. The inner and outer skins 27, 28 are connected to two roof sticks 51, 52 (best seen in Figure 6). The ends of the roof sticks are pivoted to the frame 8 at the front, as shown at 53. The deflector 9 is curved downwardly at the side terminating in a flange 54 extending from a continuation of the reinforced portion 25 of the deflector. The inner and outer skins 27, 28 are secured along their upper edges to the reinforced portion 25 by a trim strip 55 and screws 56. When the deflector 9 is in the lowered position the edge of the flange 54 engage a sealing member 57, for example a rubber strip, which is mounted in the frame 8.

A mounting 58, in which the cylinder end of the actuator 39 is pivotally mounted, is secured as by welding, to the plate 43. The actuator and its mountings are duplicated on the other side of the cab and deflector.

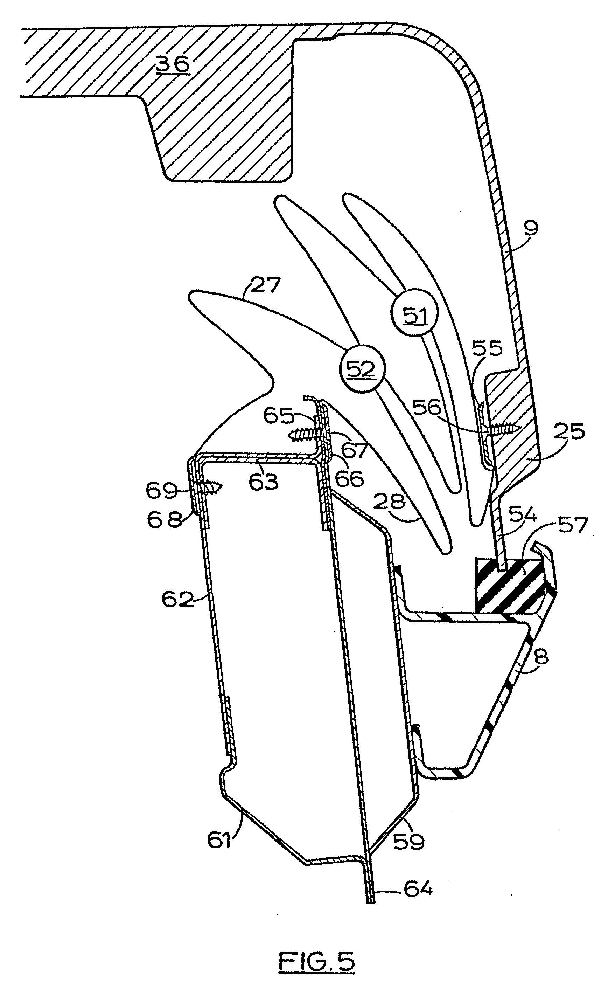

Turning now to Figure 5, the cab roof frame structure at the rear includes a pressing 59 which with pressings 61, 62, 63 forms a box section, the pressings being secured together as by welding. A depending flange 64 forms the upper part of an opening to receive a rear window of the cab. An upstanding flange 65 has the outer skin 28 of the cover secured to it by a trim strip 66 and screws 67. The inner skin 27 of the cover is secured to the pressing 62 by a trim strip 68 and screws 69. The flange 54 of the deflector continues from the sides of the deflector around the rear edge and seals against the sealing strip 57 in the frame 8.

Referring now to Figure 6, webbing straps 71, 72, 73 are secured at their upper ends to the deflector 9. The lower end of the strap 72 is secured to the pressing 62 (Figure 5). The lower end of each strap 71, 73 passes through a buckle 74 and is secured to the top of a tension box 75 which is secured to the pressing 62. Elasticated straps 76 pass around the buckles 74 and have their ends secured in the bottom of the tension boxes 75. Intermediate their ends the straps 71, 72, 73 are secured to the roof sticks 51, 52. The straps 76 are under tension and consequently as the deflector 9 is lowered those sections of the cover 26 between the deflector 9 and the roof sticks 51, 52 are maintained under tension.

Referring again to Figure 4, one method of securing the frame 8 to the cab roof frame structure is indicated in which use is made of the, or some of the, self tapping screws 30 which are inserted through registering holes in the inner and outer walls of the frame 8 and holes in the plate 41. The holes in the outer wall of the frame 8 are then plugged with caps 30A of plastics material.

The deflector 9 is raised and lowered, and retained in raised and lowered positions, by the actuators 39. A known hydraulic power pack is provided whereby the operation of one switch starts an electric motor to drive the pump and opens a solenoid valve to admit hydraulic fluid under pressure to one side of the actuators causing them to extend. Release of the switch stops the movement and operation of another switch likewise causes the actuators to be retracted.

If desired a mechanical lock of any convenient type may be provided between the deflector, preferably at or towards the rear thereof, and the cab, so that the deflector can be securely locked in the lowered position. The lock may be released directly manually or by remote control when it is desired to raise the deflector. Instead of the flexible cover to provide the side and rear walls of the compartment other constructions may be used. For example a sliding plate or a hinged plate type construction may be used. These are, however, likely to be more difficult to produce than the flexible cover type construction which has been described.

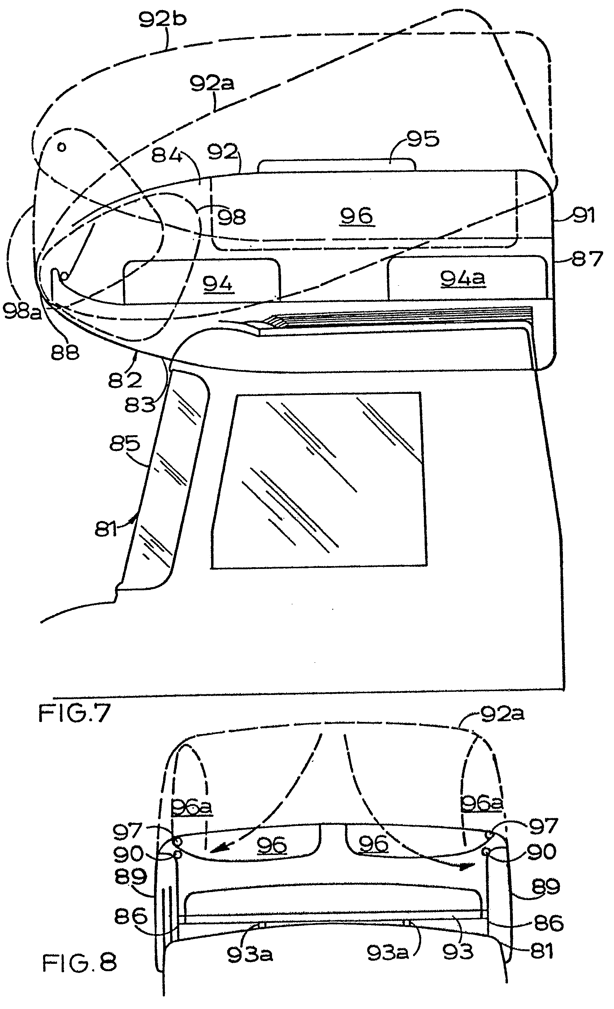

Turning now to Figures 7 and 8, the outline of one side of a cab is shown at 81. A pod 82 is secured to the roof of the cab. The pod may be permanently or removably secured to the cab. The pod 82 comprises a lower part 83 which is secured to the roof of the cab and an upper part 84 which is pivotally connected to the lower part 83 at the front and can be raised about the pivot thus constituting a deflector. It will be seen that the pod 82 extends forwardly beyond the windscreen 85 of the cab and the rear of the pod extends substantially to the rear of the cab. The longitudinal section of the pod is of aerofoil shape so as to minimise drag forces.

The lower part 83 of the pod comprises an open-topped box with side walls 86, Figure 8, and a rear wall 87, and there is open access across the front to receive the curved front wall 88 of the upper part 84. The bottom of the lower part 83 has an opening corresponding to the shape of the roof of the cab and a seal, not shown, is provided around the opening, bearing on the roof of the cab.

The upper part 84 of the pod 82 comprises side walls 89, a rear wall 91 and a slightly rounded top 92 which correspond to the deflector 9 of the previously described embodiment. The side walls 89 and rear wall 91 lie outside the side walls 86 and rear wall 87 respectively of the lower part 83 when the pod is closed, as can be seen in Figure 8. A seal 90 is provided at the top of the side walls 86 and rear wall 87 so as to seal the inside of the pod when the upper part 84 is raised. A seal, not shown, is similarly provided across the front between the upper and lower parts of the pod.

Transverse supports 93 are provided extending between the side walls 86 of the lower part 83, as shown in Figure 8. These support two bunks 94, 94a extending crosswise of the roof of the cab, that is from side to side thereof, one, 94, above the front of the cab and the other, 94a, above the rear of the cab. As seen in Figure 7, there is a gap between the bunks 94, 94a and this is located above where a ventilator is usually fitted in the roof of the cab. When the pod is fitted the ventilator is removed and it may be relocated in the top 92 of the upper part 84 of the pod as indicated at 95. The opening in the cab roof left by removal of the ventilator allows access to the pod. The supports 93 may have pads 93a which bear on the roof of the cab.

Two lockers, may be fitted to the underside of the top 92 of the pod, as indicated at 96. At their outer edges these may be hinged to the top, as at 97, and they may be mechanically locked in the raised, stowed position, shown in Figures 7 and 8, at their inner edges. When the top 92 is raised the locks can be released so that the lockers swing down into a vertical position 96a, Figure 8, in which they may provide hanging space for clothes. The lockers are raised and locked in the horizontal position again before lowering the top 92. The raised position of the top 92 is as shown in broken lines at 92a, in Figure 8.

It will be seen from Figure 7 that the headroom above the front bunk 94 is appreciably less than that available above the rear bunk 94a. If it is desired to provide additional headroom above the front bunk the hinge construction at the front of the pod may be modified as follows. The upper part 84 may be hinged to a member 98, shown in broken lines, which extends across the front of the pod, and' the member 98 may be hinged to the lower part 83. This arrangement will allow the top 92 of the pod to be raised to the position 92a as shown, or to a desired intermediate position, so that it performs the desired function as a deflector. Additionally provision is made, for example with pneumatic or hydraulic struts, to rotate the member 98 upwardly to the position shown in broken lines at 98a. With the member 98 in position 98a the top 92 of the pod takes up the position shown in broken lines at 92b, thus substantially increasing the headroom above the front bunk. The member 98 is normally locked in the down position. It will be appreciated that seals are provided between the upper part 84, member 98 and lower part 83.

For its normal use for deflecting airflow the deflector is raised, if necessary, so that its rear edge is substantially at the height of a load at the rear of the vehicle cab. At the end of a journey if this load is discharged, or changed, the deflector is reset accordingly. If there is no load projecting above the height of the cab (or cab plus pod) the deflector is lowered. For crew rest periods, when the vehicle is not in motion the deflector, or deflector and front member 97 as the case may be, are raised allowing access to the bunks. A ladder may be provided in the cab to facilitate access to the bunks.

Conventionally a sleeper cab for a vehicle provided with bunks is longer than a day cab not provided with bunks because the bunks are fitted behind the seating accommodation, and because regulations require provision of a certain minimum headroom above each bunk. By using the deflector, to, in effect, raise the roof of the cab the regulations can be met by a day cab subject to the necessary modifications which have been described. The shorter length of a day cab reduces the weight of the vehicle and so contributes to fuel economy, and also enables a reduced length vehicle/trailer combination to be used which improves manoeuvrability, or, conversely, more length of loading space without increasing the overall length of the vehicle.

## Claims

1. A vehicle cab on which is an airflow deflector (9, 92) of generally plate form extending over substantially the same width as the cab and being pivoted adjacent a front edge on a front upper portion of the cab such that the deflector (9, 92) can be swung about a horizontal axis between raised and lowered positions relative to the cab, means (39) being provided to retain the deflector (9, 92) in a raised position, the deflector (9, 92) having, or being associated with, side and rear walls (25) which in a raised position of the deflector (9, 92) define with the deflector (9, 92) a compartment above the cab, characterised in that there is an pening in the roof of the cab which provides access to the compartment from the cab, and a bunk (11) extends, or is adapted to extend, transversely of the cab in an elevated position within the envelope defined by the cab and the compartment and substantially directly above a driver's seat (3) in the cab, the bunk (11) being accessible by way of the opening when the deflector (9, 92) is in the retained raised position.

2. A vehicle cab according to Claim 1 characterised in that the driver's seat (3) includes a back rest (4) which is movable from an upright position to an alternative position, or is removable, and a second bunk (15, 16) is provided which is erectable transversely of the cab below the said elevated bunk (11), on or over the driver's seat (3) when the back rest (4) is moved to the alternative position, or is removed.

3. A vehicle cab according to Claim 2 characterised in that the back rest (4) is connected to the driver's seat (3) by a hinged connection which enables the back rest (4) to be folded forwards to a lowered position over the driver's seat (3) in which position the second bunk (15, 16) is erectable on or over the driver's seat.

4. A vehicle cab according to Claim 1 characterised in that there is a second seat in substantially transverse alignment with the driver's seat (3), the driver's seat and second seat each have a back rest (4) which is movable from an upright position to a generally horizontal position over the respective seat (3) in which position the back rests (4) constitute end portions of a second bunk disposed transversely of the cab below the said elevated bunk (11), and in that there is an intermediate bunk portion (16) which is erectable between the end portions to constitute with the end portions the second bunk.

5. A vehicle cab according to any preceding claim characterised in that the side and rear walls (26) of the compartment are of flexible material, and in that tensioning means is provided for tensioning the rear wall, the tensioning means including a strap (71, 72, 73) having an upper end secured to the rear of the deflector (9), a lower end secured to the rear of the cab and a member (74) slidable along the strap (71, 72, 73), resilient means (76) connected to the member (74) and loading the member (74) in a downward direction and means (51, 52) securing the strap (71, 72, 73) to the rear wall.

6. A vehicle cab according to any preceding claim characterised in that a frame (8) is mounted around the top of the cab and co-operating means (32, 54, 57) between the deflector (9) and the frame (8) form a seal around the periphery of the deflector (9) when the deflector (9) is in the lowered position.

7. A vehicle cab according to Claim 1 characterised in that a pod (82) is mounted above the cab comprising co-operating upper and lower parts (84, 83) which are pivotally connected adjacent the front of the pod (82), the opening in the roof communicating with the interior of the lower part (83) and the upper part (84) forming the deflector (92) and being pivotal between raised and lowered positions relative to the lower part (83).

8. A vehicle cab according to Claim 7 characterised in that the lower part (83) has side and rear walls (86, 87) and the upper part (84) has side and rear walls (89, 91) which overlap the side and rear walls (86, 87) of the lower part (83), the side and rear walls of the two parts (83, 84) in combination defining the side and rear walls of the compartment when the deflector (92) is in a raised position.

9. A vehicle cab according to Claim 8 characterised in that the pod (82) includes at its front a member (98) to which the upper part (84) is pivoted and which is connected to the lower part (83) for rotation relative to that part, rotation of the member (97) relative to the lower part (83) causing the upper part (84) to be raised at the front of the pod (82) to increase the capacity of the pod (82).

10. A vehicle cab according to any of Claims 7 to 9 characterised in that the elevated bunk is one of two front and rear bunks (94, 94a) mounted in the pod (82) transversely of the cab.

**Patentansprüche**

1. Fahrerhaus, auf dem sich ein etwa plattenförmiger Luftströmungs-Deflektor (9, 92) befindet, der im wesentlichen genauso breit ist wie das Fahrerhaus und in der Nähe einer Vorderkante an einem vorderen, oberen Abschnitt des Fahrerhauses derart angelenkt ist, daß er um eine horizontale Achse in bezug auf das Fahrerhaus in eine aufgerichtete und in eine abgesenkte Stellung verschwenkt werden kann, mit einer Vorrichtung (29) zum Halten des Deflektors (9, 92) in seiner aufgerichteten Stellung, wobei der Deflektor (9, 92) Seiten- und Rückwände (25) aufweist oder dem Deflektor Seiten- und Rückwände (25) zugeordnet sind, welche bei aufgerichteter Stellung des Deflektors (9, 92) zusammen mit diesem eine Kabine oberhalb des Fahrerhauses bilden, dadurch gekennzeichnet, daß sich in dem Dach des Fahrerhauses eine Öffnung befindet, die einen Zugang von dem Fahrerhaus zu der Kabine bildet, und daß, in Querrichtung des Fahrerhauses verlaufend, etwa direkt über dem Fahrersitz (3) in dem Fahrerhaus eine Koje (11) angeordnet ist oder angeordnet werden kann, die sich in einer erhöhten Position innerhalb der Umhüllung befindet, die von dem Fahrerhaus und der Kabine gebildet wird, wobei die Koje (11) über die Öffnung zugänglich ist, wenn der Deflektor (9, 92) sich in seiner aufgerichtet gehaltenen Stellung befindet.

2. Fahrerhaus nach Anspruch 1, dadurch gekennzeichnet, daß der Fahrersitz (3) eine Rückenlehne (4) besitzt, die sich aus einer aufrechten Stellung in eine andere Stellung bringen läßt, oder die abnehmbar ist, und daß eine zweite Koje (15, 16) vorgesehen ist, die unterhalb der erhöhten Koje (11), in Querrichtung des Fahrerhauses verlaufend, auf oder über dem Fahrersitz (3) aufbaubar ist, wenn die Rückenlehne (4) in ihre andere Stellung gebracht ist bzw. abgenommen wurde.

3. Fahrerhaus nach Anspruch 2, dadurch gekennzeichnet, daß die Rückenlehne (4) mit dem Fahrersitz (3) über eine Scharnierverbindung verbunden ist, die es ermöglicht, die Rückenlehne (4) nach vorn in eine abgesenkte Lage über dem Fahrersitz (3) zu klappen, und daß die zweite Koje (15, 16) in dieser Stellung der Rückenlehne auf oder über dem Fahrersitz aufbaubar ist.

4. Fahrerhaus nach Anspruch 1, dadurch gekennzeichnet, daß etwa in Querrichtung mit dem Fahrersitz (3) ausgerichtet ein zweiter Sitz vorgesehen ist, daß der Fahrersitz und der zweite Sitz jeweils eine Rückenlehne (4) besitzen, die aus ihrer aufgerichteten Stellung in eine im wesentlichen horizontale Stellung über dem jeweiligen Sitz (3) bringbar ist, in welcher Stellung die Rückenlehnen (4) Endabschnitte einer zweiten Koje bilden, die in Querrichtung des Fahrerhauses unterhalb der erhöhten Koje (11) verläuft, und daß ein mittlerer Kojenabschnitt (16) vorgesehen ist, der zwischen den Endabschnitten angeordnet werden kann, um zusammen mit dem Endabschnitten die zweite Koje zu bilden.

5. Fahrerhaus nach einem der vorhergehenden Ansprüche, dadurch gekennzeichnet, daß die Seiten- und Rückwände (26) der Kabine aus flexiblem Material bestehen, daß eine Spannvorrichtung zum Spannen der Rückwand vorgesehen ist, daß die Spannvorrichtung einen Gurt (71, 72, 73) aufweist, der mit einem oberen Ende an der Rückseite des Deflektors (9) und mit einem unteren Ende an der Rückseite des Fahrerhauses festgemacht ist, daß ein entlang des Gurts (71, 72, 73) gleitfähiges Element (73) vorgesehen ist, daß mit dem Element (74) eine elastische Vorrichtung (76) verbunde ist, die das Element (74) in Abwärtsrichtung belastet, und daß eine Vorrichtung (51, 52) den Gurt (71, 72, 73) an der Rückwand befestigt.

6. Fahrerhaus nach einem der vorhergehenden Ansprüche, dadurch gekennzeichnet, daß um die Oberseite des Fahrerhauses herum ein Rahmen (8) montiert ist, und daß zusammenwirkende Mittel (32, 54, 57) zwischen dem Deflektor (9) und dem Rahmen (8) eine um den Umfang des Deflektors (9) umlaufende Dichtung bilden, wenn der Deflektor (9) sich in der abgesenkten Stellung befindet.

7. Fahrerhaus nach Anspruch 1, dadurch gekennzeichnet, daß oberhalb des Fahrerhauses eine Schale (82) montiert ist, die miteinander zusammenwirkende obere und untere Teile (84, 83) aufweist, welche in der Nähe der Vorderseite der Schale (82) drehbar miteinander verbunden sind, daß die in dem Dach befindliche Öffnung eine Verbindung mit dem Inneren des unteren Teils (83) und des den Deflektor (92) bildenden oberen Teils (84) schafft, und daß das obere Teil in bezug auf das untere Teil (83) in eine aufgerichtete und in eine abgesenkte Stellung schwenkbar ist.

8. Fahrerhaus nach Anspruch 7, dadurch gekennzeichnet, daß das untere Teil (83) Seiten- und Rückwände (86, 87) aufweist, und daß das obere Teil (84) Seiten- und Rückwände (89, 91) aufweist, welche die Seiten- und Rückwände (86, 87) des unteren Teils (83) überlappen, wobei die Seiten- und Rückwände der zwei Teile (83, 84) gemeinsam die Seiten- und Rückwände der Kabine bilden, wenn der Deflektor (92) sich in einer aufgerichteten Stellung befindet.

9. Fahrerhaus nach Anspruch 8, dadurch gekennzeichnet, daß die Schale (82) an ihrer Vorderseite ein Element (98) besitzt, an dem das Oberteil (84) angelenkt ist und das mit dem unteren Teil (83) zur Drehung in bezug auf dieses Teil verbunden ist, wobei die Drehung des Elements (97) relativ zu dem unteren Teil (83) bewirkt, daß das obere Teil (84) an der Vorderseite der Schale (82) angehoben wird, um das Fassungsvermögen der Schale (82) zu erhöhen.

10. Fahrerhaus nach einem der Ansprüche 7 bis 9, dadurch gekennzeichnet, daß die erhöhte Koje entweder die vordere oder die hintere Koje (94, 94a) von zwei Kojen ist, die in Querrichtung des Fahrerhauses in der Schale (82) montiert sind.

**Revendications**

1. Cabine de véhicule sur laquelle est disposé un déflecteur (9, 92) de courant d'air de forme générale plate, disposé pratiquement sur toute la largeur de la cabine et articulé près de son bord avant sur une partie supérieure avant de la cabine de manière que le déflecteur (9, 92) puisse pivoter autour d'un axe horizontal entre des positions levée et baissée par rapport à la cabine, un dispositif (39) étant destiné à retenir le déflecteur (9, 92) dans une position levée, le déflecteur (9, 92) ayant des parois latérales et arrière (25) ou étant associé à de telles parois qui, en position levée du déflecteur (9, 92) délimitent avec le déflecteur (9, 92) un compartiment qui se trouve au-dessus de la cabine, caractérisée en ce qu'un orifice est formé dans le toit de la cabine et donne accès au compartiment à partir de la cabine, et une couchette (11) est disposée ou est destinée à être disposée transversalement à la cabine en position élevée à l'intérieur de l'enveloppe délimitée par la cabine et le compartiment et pratiquement juste au-dessus du siège (3) du conducteur dans la cabine, la couchette (11) étant accessible par l'orifice lorsque le déflecteur (9, 92) est en position levée retenue.

2. Cabine de véhicule selon la revendication 1, caractérisée en ce que le siège (3) du conducteur a un dossier (54) mobile d'une position verticale à une autre position ou est amovible, et une seconde couchette (15, 16) est disposée et peut être dépliée transversalement à la cabine au-dessous de la couchette élevée (11), sur le siège (3) du conducteur ou au-dessus de celui-ci lorsque le dossier (4) est mis dans son autre position ou est retiré.

3. Cabine de véhicule selon la revendication 2, caractérisée en ce que le dossier (4) est raccordé au siège (3) du conducteur par une articulation à charnière qui permet au dossier (4) de se replier vers l'avant en position basse sur le siège (3) du conducteur, la seconde couchette (15, 16) pouvant être dépliée sur le siège du conducteur ou par-dessus celui-ci dans cette position.

4. Cabine de véhicule selon la revendication 1, caractérisée en ce qu'un second siège est aligné en direction, sensiblement transversale sur le siège (3) du conducteur, le siège du conducteur et le second siège ayant chacun un dossier (4) mobile d'une position verticale à une position générale horizontale au-dessus du siège respectif (3), les dossiers (4), dans cette position, constituant des parties d'extrémités d'une seconde couchette disposée transversalement à la cabine au-dessous de la couchette élevée (11), et en ce qu'une partie intermédiaire (16) de couchette est destinée à être disposée entre les parties d'extrémités afin que, avec les parties d'extrémités, elle forme la seconde couchette.

5. Cabine de véhicule selon l'une quelconque des revendications précédentes, caractérisée en ce que les parois latérales et arrière (26) du compartiment sont formées d'un matériau flexible, et en ce qu'un dispositif de tension est disposé afin qu'il assure la tension de la paroi arrière, le dispositif de tension comprenant une sangle (71, 72, 73) ayant une extrémité supérieure fixée à l'arrière du déflecteur (9), une extrémité inférieure fixée à l'arrière de la cabine et un organe (74) destiné à coulisser le long de la sangle (71, 72, 73), un dispositif élastique (76) raccordé à l'organe (74) et exerçant sur celui-ci une force vers le bas, et un dispositif (51, 52) de fixation de la sangle (71, 72, 73) à la paroi arrière.

6. Cabine de véhicule selon l'une quelconque des revendications précédentes, caractérisée en ce qu'un châssis (8) est monté autour du haut de la cabine et un dispositif coopérant (32, 54, 57) est placé entre le déflecteur (9) et le châssis (8) formant un joint étanche autour de la périphérie du déflecteur (9) lorsque celui-ci est dans sa position baissée.

7. Cabine de véhicule selon la revendication 1, caractérisée en ce qu'une nacelle (82) est montée au-dessus de la cabine et comprend des parties supérieure et inférieure coopérantes (84, 83) articulées près de l'avant de la nacelle (82), l'orifice formé dans le toit communiquant avec l'intérieur de la partie inférieure (83), et la partie supérieure (84) forme le déflecteur (92) et est articulée entre des positions levée et baissée par rapport à la partie inférieure (83).

8. Cabine de véhicule selon la revendication 7, caractérisée en ce que la partie inférieure (83) a des parois latérales et arrière (86, 87), et la partie supérieure (84) a des parois latérales et arrière (89, 91) qui recouvrent les parois latérales et arrière (86, 87) de la partie inférieure (83), les parois latérales et arrière des deux parties (83, 84) délimitant en combinaison les parois latérales et arrière du compartiment lorsque le déflecteur (92) est en position levée.

9. Cabine de véhicule selon la revendication 8, caractérisée en ce que la nacelle (82) comporte à sa partie avant, un organe (98) sur lequel la partie supérieure (84) est articulée et qui est raccordé à la partie inférieure (83) afin qu'il tourne par rapport à cette partie, la rotation de cet organe (97) par rapport à la partie inférieure (83) provoquant le soulèvement de la partie supérieure (84) à l'avant de la nacelle (82) afin que la capacité de la nacelle (82) soit accrue.

10. Cabine de véhicule selon l'une quelconque des revendications 7 à 9, caractérisée en ce que la couchette élevée est l'une de deux couchettes avant et arrière (94, 94a) montées dans la nacelle (82) transversalement à la cabine.

FIG.1

FIG.2

0 033 648

FIG.3

FIG. 4

FIG.5

FIG.6

FIG.7

FIG.8